Europäisches Patentamt

European Patent Office

Office européen des brevets

(19)

(11) Numéro de publication : **0 081 705**
**B1**

(12) **FASCICULE DE BREVET EUROPÉEN**

(45) Date de publication du fascicule du brevet :
29.07.87

(51) Int. Cl.⁴ : **A 23 C    9/123**

(21) Numéro de dépôt : **82110847.9**

(22) Date de dépôt : **24.11.82**

(54) **Procédé de fabrication de yogourt.**

(30) Priorité : **16.12.81 CH 8019/81**

(43) Date de publication de la demande :
**22.06.83 Bulletin 83/25**

(45) Mention de la délivrance du brevet :
**29.07.87 Bulletin 87/31**

(84) Etats contractants désignés :
**AT BE DE FR GB IT LU NL SE**

(56) Documents cités :
**DE-A- 2 445 840**
**FR-A- 1 420 273**
**FR-A- 2 252 810**
**J.RASIC et al.: "YOGHURT. Scientific grounds, technology, manufacture and preparations", 1978, vol. 1, pages 286-287, Fermented Fresh Milk Products, Technical Dairy Publishing House Copenhagen**
**MOLKEREITECHNIK, vol. 8, no. 29, 1965, pages 33-48, (CH)**

(73) Titulaire : **SOCIETE DES PRODUITS NESTLE S.A.**
**Case postale 353**
**CH-1800 Vevey (CH)**

(72) Inventeur : **Sozzi, Tomaso**
**Chemin des Abeilles 6**
**CH-1010 Lausanne (CH)**
Inventeur : **Buhler, Marcel**
**La Musardière**
**CH-1111 Tolochenaz (CH)**
Inventeur : **Dasek, Jaroslav**
**Rue du Levant 2A**
**CH-1400 Yverdon (CH)**

# 0 081 705

**Description**

La présente invention a pour objet un procédé de fabrication d'un yogourt à longue conservation, dans lequel on fait fermenter un lait frais ou reconstitué avec une combinaison de souches de Streptococcus (S.) thermophilus et de Lactobacillus (L.) bulgaricus et l'on obtient un gel contenant les souches vivantes.

On connaît différentes manières de pasteuriser le yogourt après sa fabrication, ce qui augmente effectivement ses propriétés de conservation. Cependant, un yogourt chauffé ou pasteurisé ne contient presque plus de microorganismes vivants et perd par là-même une de ses qualités les plus estimées.

On sait cependant que pour limiter la croissance bactérienne on peut conserver le yogourt traditionnel, non pasteurisé, à une température de environ 4 °C. Mais les enzymes des bactéries lactiques du yogourt ont encore une certaine activité à cette température. Même si l'on n'observe plus de croissance bactérienne on constate encore une augmentation de l'acidité et l'apparition de goûts amers qui dégradent la qualité du yogourt.

A cet égard, E. Siegenthaler, dans la revue Molkereitechnik, vol. 8, n° 29, pp. 33-48 (1965), mentionne parmi les facteurs favorables à la conservation du yogourt les cultures à faible activité protéolytique, le travail en conditions aseptiques et l'utilisation d'une chaîne du froid à 1-5 °C ininterrompue avant la vente au consommateur.

De même, J. Rasic et J. A. Kurmann, dans le livre « Yoghurt », vol. 1, pp. 286-288 (1978), Technical Dairy Publishing House, mentionnent une méthode de biostabilisation proposée par Kurmann dès 1968 pour prévenir la postacidification du yogourt et comprenant entre autres mesures la sélection de cultures présentant diverses particularités dont notamment une faible activité protéolytique, le travail en conditions aseptiques et l'utilisation d'une chaîne du froid ininterrompue.

On connaît par ailleurs un procédé qui met en œuvre des souches de S. thermophilus et de L. bulgaricus sélectionnées pour leur résistance aux températures élevées. L'usage de ces souches permet de les inoculer dans un lait à 52 à 60 °C, de les y tenir à cette température durant 5 à 30 min. p. ex. et, après une première étape courte d'acidification à une température traditionnelle de 40-48 °C de poursuivre l'acidification à une température « basse » de 34 à 37 °C jusqu'à coagulation. Le yogourt ainsi obtenu se distingue apparemment par une meilleure aptitude à la conservation, à savoir une augmentation plus lente de l'acidité et une apparition plus tardive de l'amertume. Cependant, un tel procédé basse température est critique parce que sa durée est beaucoup plus longue, de l'ordre de 10 h, et que l'on travaille dans des conditions proches de celles où les bactéries lactiques du yogourt ne croissent plus.

On connaît encore un autre procédé, dans lequel on stérilise des bocaux en verre, on revêt la paroi intérieure des bocaux avec une culture d'amorçage traditionnelle, on verse le lait dans le bocal à une température de 85-100 °C, on scelle les bocaux hermétiquement, on les refroidit à l'eau du robinet et on les soumet à une incubation traditionnelle de 4,5 à 6 h à 45 °C jusqu'à coagulation, en l'occurence jusqu'à ce que le pH d'un témoin soit descendu à 4,5. Un tel procédé convient pour éviter une infection du yogourt, c'est-à-dire la croissance de microorganismes indésirables, mais il n'est d'aucune utilité pour limiter l'augmentation de l'acidité et l'apparition de goûts amers durant la conservation.

La présente invention a pour but de proposer un procédé de fabrication de yogourt qui d'une part, tout en laissant les souches de yogourts vivantes dans le produit, améliore les propriétés de conservation du yogourt quant au développement de l'acidité et de goûts amers au point que l'on puisse se dispenser des chaînes frigorifiques, et d'autre part permette une rapidité de coagulation du lait au moins aussi grande que celle du procédé traditionnel.

A cet effet, le procédé selon la présente invention est caractérisé par le fait que l'on fait fermeter le lait avec une combinaison de souches dans laquelle la souche de L. bulgaricus présente une faible activité protéolytique et est l'une des souches de L. bulgaricus CNCM I-179, I-180 et I-181.

On a constaté en effet que certaines souches de L. bulgaricus possèdent la propriété d'arrêter la production d'acide lactique à un pH plus élevé que la normale, notamment à un pH voisin de 5. On sait par ailleurs que les S. thermophilus produisent très rapidement de l'acide lactique mais arrêtent leur production à un pH voisin de 4,5. On a constaté alors qu'une combinaison de L. bulgaricus cessant l'acidification à pH voisin de 5 et de S. thermophilus permettait de produire un yogourt aux propriétés de conservation améliorées quant à l'augmentation de l'acidité et de l'amertume. On a trouvé que l'on pouvait expliquer cela par le fait que ces souches particulières de L. bulgaricus présentent une faible activité protéolytique et produisent donc peu des métabolites qui d'une part favorisent la croissance et par conséquent l'acidification et qui d'autre part sont à l'origine de la formation de peptides amers. On a alors sélectionné systématiquement des souches de L. bulgaricus en fonction de leur faible activité protéolytique et l'on a déposé trois souches typiques de cette propriété le 9 décembre 1981 à la Collection Nationale de Cultures de Microorganismes de l'Institut Pasteur de Paris en France où elles ont reçu les nos respectifs CNCM-I-179, I-180 et I-181.

On a vérifié alors que les souches de L. bulgaricus présentant la propriété recherchée sont extrêmement semblables et qu'en particulier elles permettent entre elles une hybridation DNA-DNA comprise entre 80 et 100 %, déterminée de la manière décrite plus loin sous le titre « essais

2

0 081 705

d'hybridation ».

On a constaté enfin que la fermentation du lait avec la combinaison d'une souche de L. bulgaricus présentant la propriété recherchée d'une faible activité protéolytique avec au moins une souche quelconque de S. thermophilus usuelle pour yogourt telle qu'on peut s'en procurer chez les fournisseurs connus de cultures d'amorçage pouvait se faire dans des temps et dans des conditions au moins aussi bonnes que celles en usage pour la production de yogourts traditionnels.

Quant au yogourt obtenu par le procédé selon la présente invention, il peut contenir 10 à 20 % en poids de matière sèche du lait et il peut présenter par $cm^3$ environ $10^5$ à $10^8$ germes d'une des souches ce L. bulgaricus à faible activité protéolytique CNCM I-179 et I-181 et environ $10^7$ à $10^{10}$ germes de S. thermophilus. Ce yogourt présente des qualités de conservation remarquables quant à l'augmentation de l'acidité et l'apparition de goûts amers par rapport aux yogourts traditionnels du commerce, au point que l'on peut se dispenser des chaînes frigorifiques aux niveaux entreposage, distribution et consommation si l'on remplit le pot de yogourt en conditions sanitaires contrôlées.

Pour mettre en œuvre le procédé selon la présente invention, on peut utiliser comme matière première un lait animal et/ou végétal, frais ou reconstitué, écrémé, semi-écrémé ou entier, pasteurisé, comprenant entre 10 et 20 % en poids de matière sèche. On peut inoculer ce lait avec 2 à 10 % en volume total d'une culture comprenant par $cm^3$ environ $10^5$ à $10^8$ germes de ladite souche de L. bulgaricus et environ $10^7$ à $10^{10}$ germes de S. thermophilus. Dans une forme de réalisation préférée, on peut inoculer en plus le lait avec 1 à 5 % en volume total d'une culture comprenant par $cm^3$ environ $10^7$ à $10^{10}$ germes de S. thermophilus filant. On peut faire fermenter le lait durant 2,5 à 6 h à une température de environ 35 à 48 °C. Le yogourt ainsi produit peut être ensuite conservé tel quel sous réfrigération ou à température de environ 20 °C s'il a été conditionné en conditions « sanitaires ».

En ce qui concerne le repiquage des souches individuelles, le milieu de culture peut être un lait frais ou reconstitué dont on a vérifié de manière connue du spécialiste la fermentabilité, qui présente une teneur en matière sèche de 9 à 12 % en poids, et auquel on ajoute environ 0,1 à 5 % en volume d'activateur sous forme d'extrait de levure par exemple. Les souches individuelles peuvent être repiquées à raison d'une quantité de culture de l'ordre de 1 à 5 % en volume pour le S. thermophilus et de l'ordre de 5 à 10 % en volume pour le L. bulgaricus, et incubées de environ 1 à 5 heures à environ 40 à 43 °C jusqu'à un pH de environ 4,4 à 5,2.

Pour la préparation des cultures d'amorçage, le milieu peut être le même que pour les repiquages. On peut préparer une culture d'amorçage unique pour le L. bulgaricus et le S. thermophilus en inoculant le milieu à raison de quantités de culture de l'ordre de 2 à 10 % en volume pour le L. bulgaricus et 1 à 5 % en volume pour le S. thermophilus et incuber durant environ 3 à 5 h à environ 40-43 °C jusqu'à un pH compris entre 4 et 5. Dans la forme d'exécution où l'on utilise aussi une souche de S. thermophilus filant, on peut préparer une culture d'amorçage séparée en inoculant le milieu à raison d'une quantité de culture de l'ordre de 1 à 6 % en volume et l'incuber durant environ 1 à 3 h à environ 40-43 °C jusqu'à un pH voisin de 5.

Les cultures d'amorçage sont alors utilisées directement pour inoculer le lait dans la fabrication du yogourt. Les exemples ci-après, précédés des « essais d'hybridation » mentionnés plus haut, sont donnés à titre d'illustration. Dans ces exemples, le terme lait est utilisé dans le sens de lait de vache, sauf indication contraire et le dénombrement des germes a été effectué sur milieu MRS.

Essais d'hybridation

On réalise des essais d'hybridation DNA-DNA entre les souches de L. bulgaricus CNCM I-179, I-180 et I-181. Pour ce faire on recueille des échantillons de chaque microorganisme. On les soumet à une lyse en solution aqueuse à l'aide de lysozyme et addition de lauryl-sulfonate de sodium. On isole le DNA du lysat et on le purifie par les méthodes de H. Saito et K. I. Miura, Biophys. Acta 72, 619-629 (1963) et I. Baess, Acta Pathol. Microb. Scand. 82, 780-784 (1974). On analyse l'hybridation DNA-DNA par la méthode de De Ley, J. H. Cattoire et A. Reynaerts, Eur. J. Biochem. 12, 133-142 (1970) telle que modifiée et décrite par M. V. Norgard et P. F. Bartell, Gilford Res. Rev. 3, 1-5 (1978). On obtient les résultats suivants :

CNCM  I-179 avec CNCM  I-180  100 %
CNCM  I-179 avec CNCM  I-181   86 %
CNCM  I-180 avec CNCM  I-181   95 %

Exemple 1

On prépare, sur milieu lait écrémé reconstitué à 10 % de matière sèche additionné de 1 % d'extrait de levure deux cultures d'amorçage présentant des pH respectifs de 4,67 et 4,66 et des degrés d'acidité Soxhlet-Henkel (°SH) respectifs de 36,60 et 34,45, et contenant, par $cm^3$, la première $4,3 \times 10^7$ germes de S. thermophilus et $7,5 \times 10^6$ germes de L. bulgaricus CNCM I-179 et la seconde $22 \times 10^7$ germes de S. thermophilus filant.

On inocule 40 l de lait entier additionné de 1 kg de lait écrémé en poudre avec 2,8 l de la première culture d'amorçage et 0,4 l de la seconde. On brasse le lait inoculé, on en remplit des pots et on les incube à 41 °C durant 4 h. Le yogourt obtenu présente une bonne texture et un bon goût. Il a un pH de 4,66 et contient par cm³ $62 \times 10^7$ S. thermophilus et $5 \times 10^6$ L. bulgaricus.

On réalise des essais de conservation à 4 °C et à 20 °C. On mesure le pH et les °SH et l'on dénombre les germes. On contrôle l'évolution après 24 h et après 1, 2, 3 et 4 semaines. Les résultats sont rassemblés sur le tableau ci-après :

| Durée conservation | Conservation à 4°C | | | Conservation à 20°C | | | | |
|---|---|---|---|---|---|---|---|---|
| | pH | °SE | dégustation | pH | °SH | germes S.x10⁷ | L.x10⁶ | dégustation |
| 24 h | 4,63 | 38,75 | | 4,43 | 43,50 | 42 | 32 | |
| 7 j | 4,49 | 48.65 | | 4,16 | 55,30 | 18 | 3 | |
| 14 j | 4,44 | 45,95 | | 4,11 | 58,20 | 19 | 3 | bon |
| 21 j | 4,36 | 46,75 | bon | 4,10 | 60,15 | 28 | 2 | bon |
| 28 j | 4,21 | 45,80 | bon | 4,10 | 60,15 | 20 | 1,1 | bon |

Essais comparatifs

Des essais comparatifs, parallèles à ceux de l'exemple 1, menés sur un yogourt traditionnel distribué par une grande chaîne montrent un pH inférieur à 4 dès la 1ère semaine, à savoir dès pH de 3,94 ; 3,89 ; et 3,83 après 1, 2 et 3 semaines de conservation à 20 °C. Le goût du yogourt était très acide et amer dès les premiers jours.

## Exemple 2

On prépare un lait écrémé reconstitué à raison de 3 kg de poudre dans 17 l d'eau. On l'inocule avec 1,4 l de la première culture d'amorçage décrite à l'exemple 1 et 0,2 l de la seconde. On brasse le lait inoculé et l'on en remplit des pots que l'on incube à 41 °C durant 4 h. On obtient un yogourt qui présente une bonne texture et un bon goût et des qualités de conservation similaires à celles du yogourt de l'exemple 1.

## Exemples 3 à 7 et exemple comparatif

On prépare, sur un milieu lait écrémé reconstitué à 12 % en poids de matière sèche additionné de 1 % en poids d'extrait de levure, de 20 à 200 l de diverses cultures d'amorçage pour la fabrication de yogourt. Les caractéristiques de ces cultures d'amorçage sont réunies dans le tableau ci-après où les lettres S. et L. utilisées seules signifient S. thermophilus et L. bulgaricus :

| Ex. No. | Culture amorçage | pH | °SH | Germes S.x10⁷ | L.x10⁶ |
|---|---|---|---|---|---|
| 3 | S. + L. CNCM I-181 | 4,51 | 40,80 | 20 | 5 |
| 4 | S. + L. CNCM I-180 | 4,52 | 41,40 | 38 | 4,5 |
| 5 | S. + L. CNCM I-180 | | | 45 | 23 |
| 6 | S. + L. CNCM I-181 | 4,28 | 51,80 | 24 | 60 |
| 7 | S. + L. CNCM I-179 | 4,22 | 53,50 | 11 | 40 |

Avec ces diverses cultures, on fabrique des yogourts à partir d'un lait entier auquel on ajoute du lait écrémé en poudre pour obtenir une teneur en matière séche de 15 % en poids. Pour chacune des fabrications correspondant aux différents exemples, on inocule le lait avec 9 % en volume de la culture S. + L. On brasse le lait inoculé et l'on en remplit des pots que l'on incube à 41 °C durant 4 h pour les ex. 3 et 4, 3,5 h pour l'ex. 5, 5,25 h pour l'ex. 6 et 6 h pour l'ex. 7. On obtient des yogourts de bonne texture et de bon goût qui se conservent mieux que les yogourts traditionnels du commerce quant à l'augmentation de l'acidité et l'apparition de goûts amers. Les caractéristiques des yogourts obtenus et leur aptitude à la conservation sont données dans le tableau ci-après qui rend compte de mesures effectuées généralement immédiatement après, 24 h après et 7, 14, 21 et 28 jours après la fin de l'incubation. Ce tableau présente aussi, à titre de comparaison, le résultat de mesures parallèles faites sur un yogourt typique traditionnel du commerce :

| Ex. No. | Durée conservation | Conservation à 4°C | | | Conservation à 20°C | | | | |
|---|---|---|---|---|---|---|---|---|---|
| | | pH | °SH | dégustation | pH | °SH | germes | | dégustation |
| | | | | | | | $S.x10^7$ | $L.x10^6$ | |
| 3 | 0 | | | | 4,78 | 33,75 | 12 | 3,1 | |
| | 24 h | 4,70 | 37,90 | | 4,47 | 42,35 | 12 | 4,7 | |
| | 7 j | 4,48 | 44,00 | | 4,12 | 55,70 | 4 | 7 | |
| | 14 j | 4,43 | 44,05 | | 4,05 | 61,40 | 18 | 2 | bon |
| | 21 j | 4,42 | 43,85 | bon | 4,07 | 61,95 | 23 | 15 | bon |
| | 28 j | 4,27 | 45,00 | bon | | 67,80 | 15 | 5 | bon |
| 4 | 0 | | | | 4,74 | 35,85 | 19 | 1,2 | |
| | 24 h | 4,61 | 40,00 | | 4,49 | 42,40 | 18 | 2,5 | |
| | 7 j | 4,42 | 45,30 | | 4,11 | 57,70 | 16 | 7 | |
| | 14 j | 4,42 | 46,60 | | 4,05 | 61,20 | 12 | 1,6 | bon |
| | 21 j | 4,35 | 46,50 | | 4,08 | 62,50 | 17 | 6 | bon |
| | 28 j | 4,21 | 45,80 | | | 65,50 | 10 | 7 | bon |
| 5 | 0 | | | | 4,75 | 36,40 | | | |
| | 24 h | 4,55 | 39,70 | | 4,40 | 44,40 | 30 | 2 | |
| | 7 j | 4,53 | 40,05 | bon | 4,13 | 55,20 | 30 | 7 | bon |
| | 14 j | 4,37 | 43,20 | bon | 4,01 | 61,65 | 7 | 15 | bon |
| | 21 j | 4,36 | 44,40 | bon | | | | | |
| | 28 j | 4,38 | 45,50 | bon | | | | | |
| 6 | 0 | | | | 4,67 | 35,35 | | | |
| | 24 h | 4,64 | 36,65 | bon | 4,41 | 41,80 | 10 | 6 | bon |
| | 7 j | 4,39 | 41,00 | bon | 3,99 | 58,25 | 10 | 20 | bon |
| | 14 j | 4,38 | 42,85 | bon | 3,91 | 61,80 | 3,3 | 3,6 | bon |
| | 21 j | 4,41 | 42,50 | bon | 3,94 | 65,90 | 7,2 | 2,4 | bon |
| | 28 j | 4,36 | 43,70 | bon | 3,88 | 66,30 | | | |

# 0 081 705

(Suite)

| Ex. No. | Durée conser- vation | Conservation à 4°C | | | Conservation à 20°C | | | | |
|---|---|---|---|---|---|---|---|---|---|
| | | pH | °SH | dégus- tation | pH | °SH | germes | | dégus- tation |
| | | | | | | | $S.\times 10^7$ | $L.\times 10^6$ | |
| 7 | 0 | | | | 4,68 | 38,35 | | | |
| | 24 h | 4,63 | 40,00 | bon | 4,50 | 44,00 | 1 | 38 | bon |
| | 7 j | 4,43 | 41,60 | bon | 4,05 | 56,75 | 3 | 2,4 | bon |
| | 14 j | 4,40 | 44,40 | bon | 3,99 | 61,95 | 1,7 | 0,9 | bon |
| | 21 j | 4,38 | 45,10 | . . . | | | | | |
| | 28 j | 4,36 | 44,75 | bon | 3,93 | 66,60 | | | bon |
| Comparatif | 24 h | 4,10 | 57,35 | | 4,04 | 58,00 | 18 | 200 | |
| | 7 j | 4,04 | 59,35 | | 3,94 | 68,40 | 2 | 60 | |
| | 14 j | 4,05 | 63,00 | | 3,89 | 74,20 | 33 | 50 | acide |
| | 21 j | 3,98 | 63,20 | | 3,83 | 79,00 | 72 | 0,8 | acide, amer |

On voit ainsi qu'avec le présent produit on peut se dispenser des chaînes frigorifiques aux niveaux entreposage, distribution et consommation si l'on remplit les pots de yogourt en conditions sanitaires contrôlées. Ceci est impossible avec les yogourts traditionnels du commerce. Le présent procédé ouvre donc la voie à une technologie simplifiée et une réduction des investissements au niveau usine, distribution et consommation.

## Exemple 8

On mélange à 50 °C 1 kg de lait écrémé en poudre, 1 kg de soja entier dépelliculé réduit en poudre et 18 l d'eau. On homogénéise à 50 °C. On pasteurise à 90 °C durant 30 min. On refroidit à 41 °C. On inocule avec une culture d'amorçage de L. bulgaricus CNCM I-181 et de S. thermophilus. On incube 3 h jusqu'à pH 4,7. On obtient un bon produit présentant une texture impeccable.

## Revendications

1. Procédé de fabrication d'un yogourt à longue conservation, dans lequel on fait fermenter un lait frais ou reconstitué avec une combinaison de souches de Streptococcus thermophilus et de Lactobacillus bulgaricus et l'on obtient un gel contenant les souches vivantes, caractérisé par le fait que l'on fait fermenter le lait avec une combinaison de souches dans laquelle la souche de Lactobacillus bulgaricus présente une faible activité protéolytique et est l'une des souches de Lactobacillus bulgaricus CNCM I-179, I-180 et I-181.

2. Procédé selon la revendication 1, caractérisé par le fait que l'on inocule le lait avec 2-10 % en volume total d'une culture comprenant par $cm^3$ environ $10^5$ à $10^8$ germes de ladite souche de Lactobacillus bulgaricus et environ $10^7$ à $10^{10}$ germes de Streptococcus thermophilus.

3. Procédé selon la revendication 2, caractérisé par le fait qu'on inocule en plus le lait avec 1 à 5 % en volume total d'une culture comprenant par $cm^3$ environ $10^7$ à $10^{10}$ germes de Streptococcus thermophilus filant.

4. Procédé selon la revendication 1, caractérisé par le fait que l'on fait fermenter un lait animal et/ou végétal, frais ou reconstitué, écrémé, semi-écrémé ou entier, pasteurisé, comprenant entre 10 et 20 % en poids de matière sèche.

5. Procédé selon la revendication 1, caractérisé par le fait que l'on fait fermenter le lait durant 2,5 à 6 h à une température de 35 à 48 °C.

## Claims

1. A process for the production of a yogurt with a long storage life, in which process, a fresh or

6

reconstituted milk is fermented with a combination of strains of Streptococcus thermophilus and Lactobacillus bulgaricus and a gel is obtained containing the living strains, wherein the milk is fermented with a combination of strains in which the Lactobacillus bulgaricus strain has a low proteolytic activity and is one of the strains of Lactobacillus bulgaricus CNCM I-179, I-180 and I-181.

2. A process according to claim 1, wherein the milk is inoculated with from 2 to 10 % by total volume of a culture containing from about $10^5$ to $10^8$ organisms per $cm^3$ of said strain of Lactobacillus bulgaricus and from about $10^7$ to $10^{10}$ organisms per $cm^3$ of Streptococcus thermophilus.

3. A process according to claim 2, wherein the milk is inoculated with from about $10^7$ to $10^{10}$ organisms per $cm^3$ of thickening Streptococcus thermophilus.

4. A process according to claim 1, wherein a pasteurized animal and/or vegetable milk which is fresh or reconstituted, skimmed, semi-skimmed or whole and contains from 10 to 20 % weight dry matter is fermented.

5. A process according to claim 1, wherein the milk is fermented for 2.5 to 6 hours at a temperature of from 35 to 48 °C.

**Patentansprüche**

1. Verfahren zur Herstellung eines Joghurts mit langer Haltbarkeit, bei welchem man eine Frischmilch oder eine rekonstitutierte Milch mit einer Kombination von Stämmen von Streptococcus thermophilus und von Lactobacillus bulgaricus gären läßt und bei welchem man ein Gel erhält, welches lebende Stämme enthält, dadurch gekennzeichnet, daß man die Milch mit einer Kombination von Stämmen gären läßt, in welcher Kombination der Stamm von Lactobacillus bulgaricus eine schwache proteolytische Aktivität aufweist und einer der Stämme von Lactobacillus bulgaricus CNCM I-179, I-180 und I-181 ist.

2. Verfahren nach Anspruch 1, dadurch gekennzeichnet, daß man die Milch mit insgesamt 2-10 Vol-% einer Kultur beimpft, welche je $cm^3$ etwa $10^5$ bis $10^8$ Keime von dem genannten Stamm von Lactobacillus bulgaricus und etwa $10^7$ bis $10^{10}$ Keime von Streptococcus thermophilus enthält.

3. Verfahren nach Anspruch 2, dadurch gekennzeichnet, daß man die Milch außerdem mit insgesamt 1 bis 5 Vol.-% einer Kultur beimpft, welche je $cm^3$ etwa $10^7$ bis $10^{10}$ Keime von fadenförmigen Streptococcus thermophilus enthält.

4. Verfahren nach Anspruch 1, dadurch gekennzeichnet, daß man eine pasteurisierte tierische und/oder pflanzliche Milch, eine pasteurisierte Frischmilch oder eine pasteurisierte rekonstituierte Milch, eine pasteurisierte entrahmte oder halbentrahme Milch oder eine pasteurisierte Vollmich gären läßt, welche zwischen 10 und 20 Gew.-% Trockensubstanz enthält.

5. Verfahren nach Anspruch 1, dadurch gekennzeichnet, daß man die Milch während 2,5 bis 6 Stunden bei einer Temperatur von 35 bis 48 °C gären läßt.